# EUROPEAN PATENT APPLICATION

(11) **EP 2 026 236 A2**
(43) Date of publication of application: **18.02.2009**
(21) Application number: 08252333.3
(22) Date of filing: 09.07.2008
(51) Int. Cl.: G06F 21/20

(54) **Biometric pin block**

(30) Priority: 02.08.2007 US 888686
(71) Applicant: NCR Corporation, Dayton, Ohio 45479 (US)
(72) Inventor: Harrow, Charles, Dundee DD5 3LR (GB)
(74) Representative: MacLeod, Roderick William

(57) **Abstract**

A system for biometric user identification is described. Biometric information is captured from a user and compared to a biometric template that is read from an identification token associated with the user. A data structure is constructed comprising data having a predetermined arrangement, wherein the predetermined arrangement is selected to indicate the result of the comparison

## Description

The present invention relates to biometric identification. It is particularly related to, but in no way limited to, a method and system for transmitting biometric identification information in an Automated Teller Machine (ATM) network.

To ensure that services provided by an Automated Teller Machine (ATM) are only provided to the person authorized in relation to a particular account, a method of identifying a person using an ATM is required.

A common method of identifying a user is by a Personal Identification Number (PIN) which is known only to the person to which the PIN relates, and to the financial institution to which the account relates. The user enters their PIN into the ATM and it is encoded and transmitted to the financial institution for verification. If the entered PIN corresponds to that expected for the specified account, the user is allowed to utilize the ATM for functions relating to that account.

This method of identification has several disadvantages. For example, each user must memorize a PIN, and if it is forgotten access to the account is not possible. Also, the security of the system is reliant on the secrecy of the PIN and so should a third person gain knowledge of a PIN, they may be able to access the account. It is possible for a third party to gain knowledge of a PIN in a range of ways, which is a known flaw in the use of PINs for securing access to accounts.

Biometric identification is a method of identification in which a particular feature of a user's body is utilized to identify them. For example, a finger print or iris image may be read and compared to a stored version for verification. Biometric identification overcomes the problems of the use of PINs as finger print and iris images are unique to a person and cannot be taken for use by a third party. Furthermore, since the method utilizes physical characteristics of a person's body, there is no need for users to remember a number to gain access to an account. Biometric identification therefore has the potential to improve the security and convenience of ATM systems.

In order for biometric identification to be implemented in ATM systems, processes and systems to capture, process, transmit and verify biometric identities are required. Identification by PIN is a standard method utilized around the world, allowing interaction of ATM systems in different countries. A standard system for biometric identification allowing similar globalinteraction is required. However, the provision of such global interaction using current techniques would require the development of new and commonly agreed communication and security protocols, which would be prohibitively expensive.

There is therefore a requirement for a system to allow the use of biometric identification that can be implemented in a cost-effective manner.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

There is provided a method of user identification for use at a networked terminal, comprising the steps of capturing biometric information representative of a person; comparing the captured biometric information to a biometric template stored on an identification token; constructing a data structure for transmission to a remote server utilizing data comprising a predetermined arrangement, wherein the predetermined arrangement is selected to indicate the result of the comparison.

The networked terminal may be an Automated Teller Machine.

The biometric information may be an iris image or a finger print.

The step of comparing the captured biometric information may be performed by a secure processing unit.

The secure processing unit may be an Encrypting PIN Pad (EPP) of an Automated Teller Machine.

The data structure may comply with a standard for PIN transmission in a financial network.

The data structure may comply with ISO format 3.

The data structure may be encrypted prior to transmission to a remote server.

The method may further comprise the step of reading a biometric template from an identification token.

The data structure may comprise account information associated with an account of the user.

The account information may be read from an identification token.

If the result of the comparison is a match, the predetermined arrangement may be a repetition of data.

The method may further comprise the step of capturing a PIN of the user.

The data structure may be constructed using data further comprising the captured PIN.

There is provided a networked terminal, comprising a biometric information capture device, an identification token reading device, a secure processing unit, configured to compare biometric information captured by the capture device with a biometric template read from an identification token, and to construct a data structure for transmission to a remote server comprising data having a predetermined arrangement, wherein the predetermined arrangement is selected to indicate the result of the comparison.

The biometric information capture device may be an iris image or a finger print capture device.

The identification token reading device may be configured to read a biometric template from an identification token.

The networked terminal may be configured to capture a PIN of the user.

The data structure may be constructed using data further comprising the captured PIN.

Many of the attendant features will be more readily appreciated as the same becomes better understood by reference to the following detailed description considered in connection with the accompanying drawings. The preferred features may be combined as appropriate, as would be apparent to a skilled person, and may be combined with any of the aspects of the invention.

Embodiments of the invention will be described, by way of example, with reference to the following drawings, in which:
Figure 1 is a block diagram of an ATM in accordance with an embodiment of the invention;
Figure 2 is an example of a cryptographically bound data structure;
Figure 3 is a flow chart of an embodiment of the invention;
Figure 4 is a diagram of an ISO format 3 PIN block calculation; and
Figure 5 is an example of a PIN block calculation in accordance with an embodiment of the invention.

Embodiments of the present invention are described below by way of example only. These examples represent the best ways of putting the invention into practice that are currently known to the Applicant although they are not the only ways in which this could be achieved.

The current invention provides systems and methods to allow the use of existing ATM systems to provide user identification services.

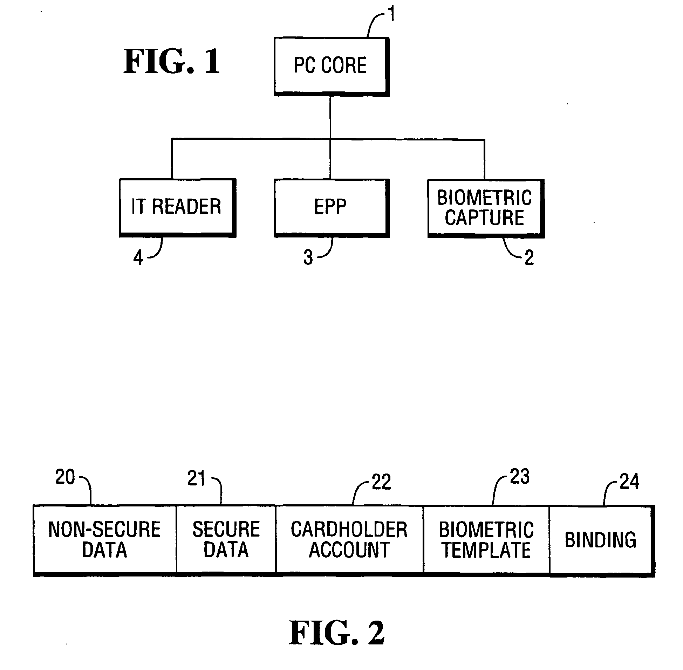

Figure 1 shows a block diagram of parts of an Automated Teller Machine (ATM) in accordance with an embodiment of the current invention. The ATM includes a PC core 1 which controls the ATM and communicates with financial institutions via the ATM network to which the ATM is connected. A biometric capture device 2 is provided to capture the relevant biometric details of the user; for example, a fingerprint reader or iris scanner may be provided. The Encrypting PIN Pad (EPP) 3 is a secure, tamper proof, unit that includes a processing system for processing biometric information. The EPP may also include keys for users to enter data. The EPP is constructed in such a way that any attempt to modify the hardware or software will result in destruction of the device, or detection of the attempt. Such methods of construction are known in the art, for example in connection with the construction of conventional EPP units for processing PIN entries.

An Identification Token (IT) reader 4 is also provided for reading the IT of a user. The IT is unique to each user and contains details of the user's account(s) to which the IT relates and their biometric identity. The IT may be a credit or debit card with a magnetic strip, a smart card, or other device capable of storing data and being read by an ATM, for example a contactless card, mobile phone or PDA.

In an embodiment of the invention, the IT stores a Cryptographically Bound Data Structure (CBDS) containing at least the account details of the card holder and their biometric template. A biometric template is data that represents the biometric identity of the person to which it relates. For example, if the biometric being measured is a fingerprint, the template may contain details of a number of points in that fingerprint. This removes the need to store and compare a detailed image of the whole finger print. The template contains sufficient information to provide a unique identity (or sufficiently uncommon to retain security), without requiring the large amounts of storage space and computation power that would be needed to store the entire image.

A CBDS is a data structure in which the fields of the structure are cryptographically bound together such that the data cannot be separated or modified in any way. This prevents the data on the IT being modified in an effort to falsify identification of the holder. Figure 2 shows an example of a CBDS for use in the current invention. Other methods of securely storing data will be apparent to the skilled person.

The non-secure data field 20 is not cryptographically bound and is used to hold information that is not relevant to the security of the system. The secure data field 21 may be used to hold data relating to the security of the system, but not relating to the biometric template or account number. For example, data relating to commercial identifiers, version numbers or other identifying descriptors may be stored in this field. The cardholder account field 22 stores data identifying the account to which the IT relates, for example, the account number. The biometric template field 23 holds the data describing the biometric identity of the holder, as explained above. Finally, the binding field 24 contains data calculated from the secure fields of the data structure, thereby preventing modification or substitution of data in those fields. Methods for binding a CBDS are well known in the art.

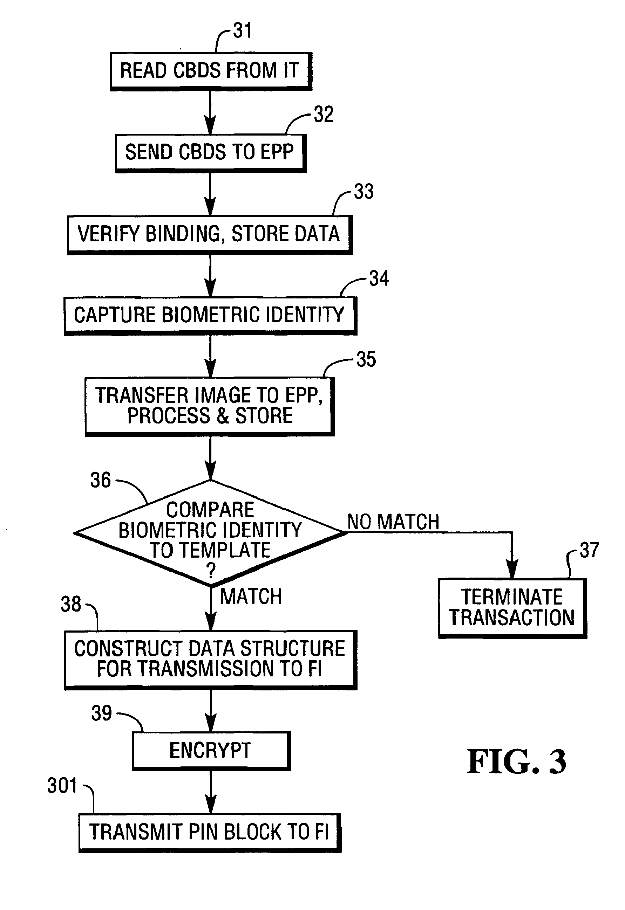

Figure 3 shows a flow chart of the operation of a system in accordance with the invention.

At step 31 the user presents their IT to the reader on the ATM and the reader reads the CBDS from the IT. The PC core sends the CBDS to the EPP (step 32), which verifies the binding and stores the account number and biometric template in a secure storage location (step 33).

At step 34 the ATM captures the biometric identity of the user, for example by acquiring a fingerprint or iris image from the biometric capture device. The acquired image data is transferred to the EPP in a secure manner such that it cannot be modified, substituted or replayed, thereby preventing falsification of the biometric identity of the user (step 35).

The image is processed by the EPP to capture data points for comparison with those stored in the biometric template. These points are then compared (step 36) to the biometric template read from the IT, and it is verified that the user of the ATM is the same as the authorized holder of the IT. If the captured identity does not match that stored on the IT, the transaction is terminated (step 37). If the captured identity matches that stored in the IT, a data structure is constructed (step 38), as explained in detail below. The data structure is encrypted (step 39), before being transmitted (step 301) to a FI for verification to obtain authorization for the transaction. In an alternative method, a data structure may be constructed and transmitted if the captured identity does not match that stored on the IT to indicate to the FI that an attempt to access the account has failed.

Since, when using biometric identification, the verification of the user is performed at the ATM by a comparison of the read biometric image to that held on the IT, there is no need to transmit the actual biometric data to the financial institution. However, a mechanism for securely indicating to the financial institution that the identity has been verified is required. As described above, this is achieved by constructing a data structure which is encrypted and transmitted to a FI. Conventional ATM systems operate by constructing a PIN block from the PIN and other data, encrypting that block and transmitting it to the FI. The FI then decrypts the block and verifies the PIN. In an embodiment of the invention, a conventional PIN block format is utilized such that a biometric identification system can be provided utilizing the existing ATM network.

Since there is no need to indicate a PIN or actual biometric data to the FI, the PIN block must simply indicate the outcome of the comparison, and be verifiable as originating from the ATM. This is achieved by constructing a PIN block using an identifiable arrangement of data, encrypting that PIN block using the ATM's PIN key and transmitting it to the FI. At the FI the relevant PIN key is used to decrypt the PIN block and the contents of the plain text are checked for the expected identifiable arrangement. If the PIN block decrypts to reveal the identifiable arrangement, the FI knows that the block originated at the ATM and that the identity was verified successfully by that ATM. A signal can then be sent to the ATM indicating that the transaction can proceed. The encryption, decryption and transmission of the PIN block proceed as is known in the art.

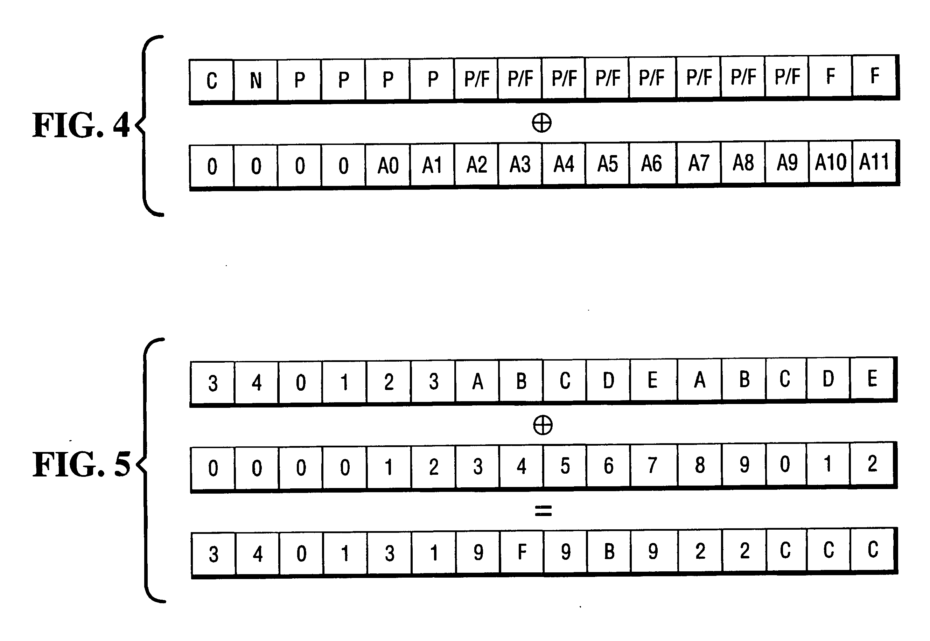

In order to allow different ATM networks and financial institutions to interact there are a number of agreed standards for the construction of PIN blocks when a conventional PIN system is utilized to identify a user. One such standard is ISO format 3, in which a PIN block for transmission from an ATM to a financial institution is constructed by EXOR'ing two 64 bit numbers. Figure 4 illustrates the structure of the two numbers used in the calculation.
C - Control
N - Number of PIN digits (4 to 12)
P - PIN digit
F - Fill digit (A to F, selected randomly by the EPP)
An - Account number

The PIN block resulting from the EXOR operation is then encrypted by the EPP and transmitted to the financial institution. The account number is also transmitted to the financial institution such that the EXOR process can be reversed by the financial institution to recover the original PIN data. In a conventional PIN system the received data is decrypted, the EXOR process reversed and the resulting PIN data compared to a reference data set for verification

In an embodiment of the invention the EPP constructs a PIN block according to ISO format 3, but rather than using a PIN and random fill digits, an arbitrary PIN and a set of fill digits having a identifiable arrangement are utilized. When the PIN block is decrypted and analyzed by the financial institution a check is made for the identifiable arrangement. If the arrangement is present in the PIN block then the PIN block is genuine and the financial institution is thus sure that the user's identity has been verified. If the arrangement is not present, the identification has not been verified and the transaction can be terminated. A further level of security could be provided by also requiring the user to enter their PIN and using that in the construction of the PIN block rather than an arbitrary PIN. In addition to checking for the identifiable arrangement, the expected PIN would also be checked for.

Figure 5 shows an example of an ISO format 3 PIN block construction in accordance with the invention. In this example the Control digit is 3 and a four digit "PIN" is utilized, hence the first two digits are 3 and 4. The next four digits are the "PIN", which is an arbitrary number, and is not considered by the financial institution. In this example "0123" is used as the PIN. The remaining digits of the first number are then filled with the arrangement selected by the financial institution. In this example a number having a repeat is utilized and thus "ABCDEABCDE" is inserted as the fill digits. The second number is constructed as in the conventional ISO format 3, using 4 zeroes followed by the account number.

The PIN block is then encrypted using the PIN key and known cryptographic methods before being transmitted to the FI in the conventional manner together with the unencrypted account number. Since the PIN block being transmitted has the same format as a conventional PIN block it can be handled by the same equipment and process as a conventional PIN block. At the financial institution the PIN block is decrypted, the EXOR process reversed using the received account number and the resulting data inspected for the identifiable arrangement as explained above.

In the above example of a repeating arrangement, "ABCDEABCDE" is simply one possible example of that arrangement. Others are equally possibly, while still providing the identifiable arrangement expected by the financial institution. For example "EDCBAEDCBA", or "AEDBCAEDBC" have a repeating arrangement than can be discerned by the financial institution. The ability to use different values prevents the repeated use of the same values, thereby lessening the possibility of the intercepted PIN blocks being used illegitimately. A repeating number as shown in the above example is one example of a possible arrangement, but others are equally possible. For example, a mirror-image could be utilized, or other more complicated arrangements. Furthermore, the arrangement may be defined in terms of the actual values used, rather than a particular arrangement.

In the above description an arbitrary PIN number is used by the EPP when constructing the PIN block. However, in an alternative embodiment the user may be requested to enter their PIN, and that number may be used in the construction of the PIN block in place of the arbitrary PIN referenced above. The financial institution would then verify the entered PIN in addition to checking for the identifiable arrangement. The entry of the PIN may be conditional on the biometric identity test being passed, and would the identity process may thus be a two-stage test.

The above description has described the use of an EPP to securely process the biometric data. However, any secure processing device could be utilized to perform this function and the invention is not constrained to the use of an EPP.

The above example has been described in relation to ISO format 3, but other formats of PIN block are also applicable to the current invention and ISO format 3 is only used as an example. Other formats of PIN block may include different parameters in the numbers used in the construction of the block, the block may be of a different length and various other variations may be used as will be understood by the skilled person.

Any range or device value given herein may be extended or altered without losing the effect sought, as will be apparent to the skilled person.

It will be understood that the benefits and advantages described above may relate to one embodiment or may relate to several embodiments. It will further be understood that reference to 'an' item refer to one or more of those items.

It will be understood that the above description of a preferred embodiment is given by way of example only and that various modifications may be made by those skilled in the art. The above specification, examples and data provide a complete description of the structure and use of exemplary embodiments of the invention. Although various embodiments of the invention have been described above with a certain degree of particularity, or with reference to one or more individual embodiments, those skilled in the art could make numerous alterations to the disclosed embodiments without departing from the scope of this invention.

## Claims

1. A method of user identification for use at a networked terminal, comprising the steps of
capturing biometric information representative of a person;
comparing the captured biometric information to a biometric template stored on an identification token;
constructing a data structure for transmission to a remote server utilizing data comprising a predetermined arrangement, wherein the predetermined arrangement is selected to indicate the result of the comparison.

2. A method of user identification according to claim 1, wherein the networked terminal is an Automated Teller Machine.

3. A method of user identification according to claim 1 or claim 2, wherein the biometric information is an iris image or a finger print.

4. A method of user identification according to any of claims 1 to 3, wherein the step of comparing the captured biometric information is performed by a secure processing unit.

5. A method of user identification according to claim 4, wherein the secure processing unit is an Encrypting PIN Pad (EPP) of an Automated Teller Machine.

6. A method of user identification according to any preceding claim, further comprising the step of reading a biometric template from an identification token.

7. A method of user identification according to any preceding claim, wherein the data structure comprises account information associated with an account of the user.

8. A method of user identification according to claim 7, wherein the account information is read from an identification token.

9. A networked terminal, comprising
a biometric information capture device,
an identification token reading device,
a secure processing unit, configured to compare biometric information captured by the capture device with a biometric template read from an identification token, and to construct a data structure for transmission to a remote server utilizing data comprising a predetermined arrangement, wherein the predetermined arrangement is selected to indicate the result of the comparison.

10. A networked terminal according to claim 9, wherein the networked terminal is an Automated Teller Machine.

11. A networked terminal according to claim 9 or claim 10, wherein the biometric information capture device is an iris image or a finger print capture device.

12. A networked terminal according to any of claims 9 to 11, wherein the secure processing unit is an Encrypting PIN Pad (EPP) of an Automated Teller Machine.

13. A networked terminal according to any of claims 9 to 12, wherein the identification token reading device is configured to read a biometric template from an identification token.

14. A networked terminal according to any of claims 9 to 13, wherein the data structure comprises account information associated with an account of the user.

15. A networked terminal according to claim 14, wherein the account information is read from an identification token.
